(19) Europäisches Patentamt

European Patent Office

Office européen des brevets

(11) EP 1 383 225 A1

(12) EUROPEAN PATENT APPLICATION

(43) Date of publication:
21.01.2004 Bulletin 2004/04

(51) Int Cl.$^7$: H02K 3/18, H02K 1/14

(21) Application number: 02015855.6

(22) Date of filing: 16.07.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicant: Grizzly Technology Corporation
Taipei County (TW)

(72) Inventor: Hsu, Chun-Pu
Tapei County (TW)

(74) Representative: Viering, Jentschura & Partner
Steinsdorfstrasse 6
80538 München (DE)

(54) **Stator structure having flat wire wound coils**

(57) An assembly type stator structure having flat coils (31) is provided, whereby the occupation ratio of stator coils (31) in stator wire grooves can be enhanced under the working condition of high current. Moreover, an accurate number of turns of coils can be provided so that the torsion coefficient $K_T$ or the counter electro force coefficient $K_E$ of an electromotor or a generator can be precisely controlled, thereby a more accurate rated maximal rotation speed can be designed for an electromotor or a generator of a certain volume. The flat coils are wound with a high occupation ratio so that the impedance of copper wire of the flat coils can be reduced. Therefore, an electromotor or a generator using the flat coils can have a higher operational efficiency and a more accurately set rated maximal operational speed.

Fig 7A

EP 1 383 225 A1

## Description

## Field of the invention

The present invention relates to an assembly type stator structure having flat wire wound coils, whereby coils, wire groove seats, stator ring portions, and stator tooth portions of an electromotor or generator can be separated from the stator portion.

## Background of the invention

An electromotor or generator must operate at an optimal working point to have the highest operational efficiency. Therefore, it is necessary to accurately control the operational range. From the following equation:

$$E=\Omega \cdot D \cdot B \cdot L \cdot N/2= \Omega \cdot K_E; \ K_E=K_T$$

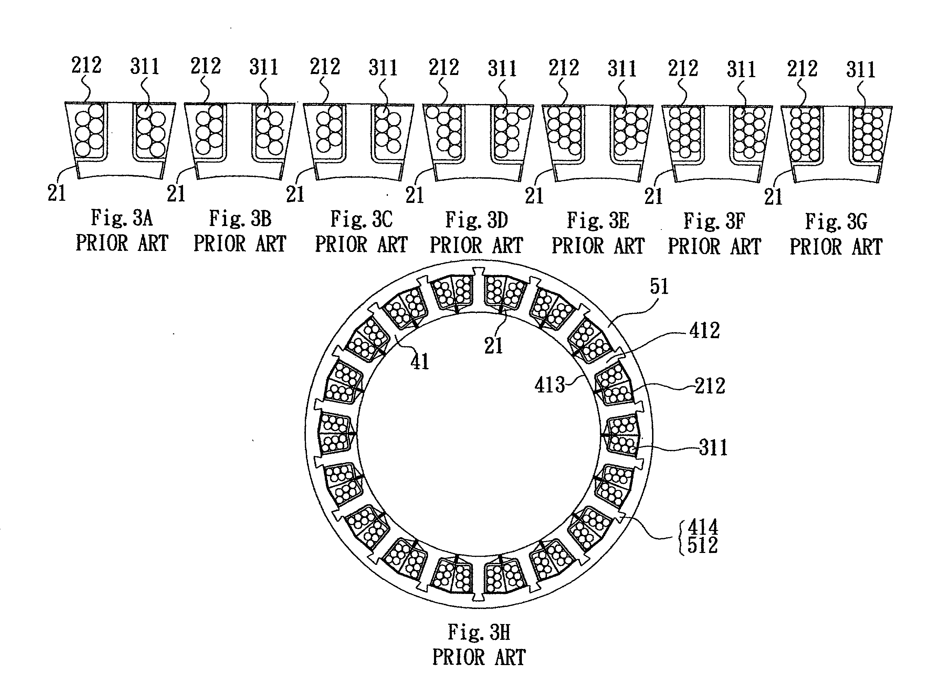

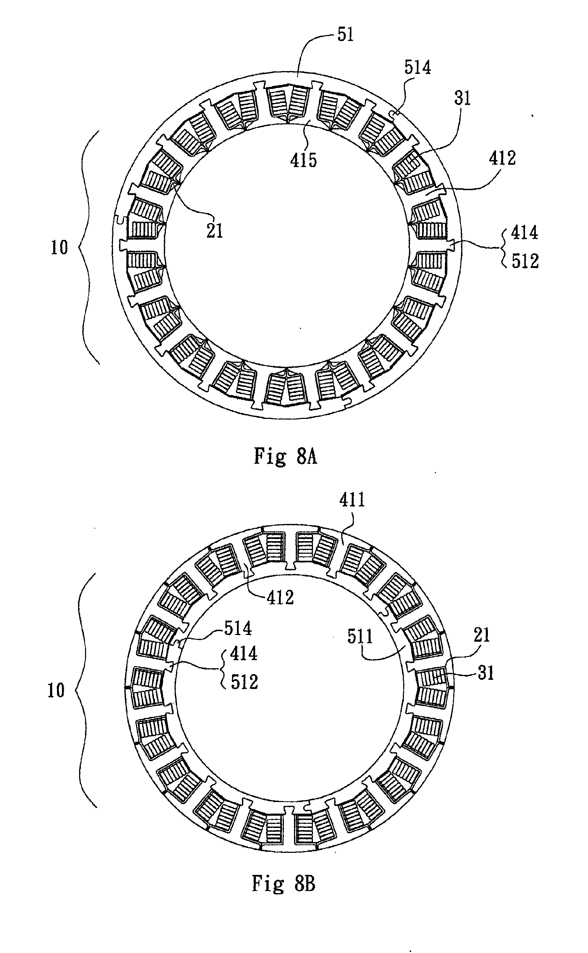

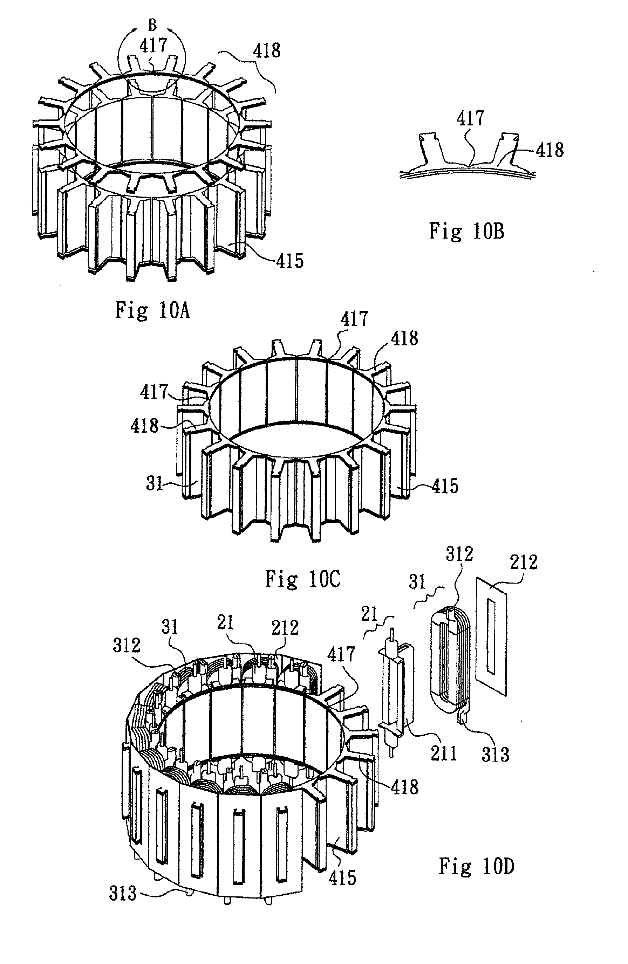

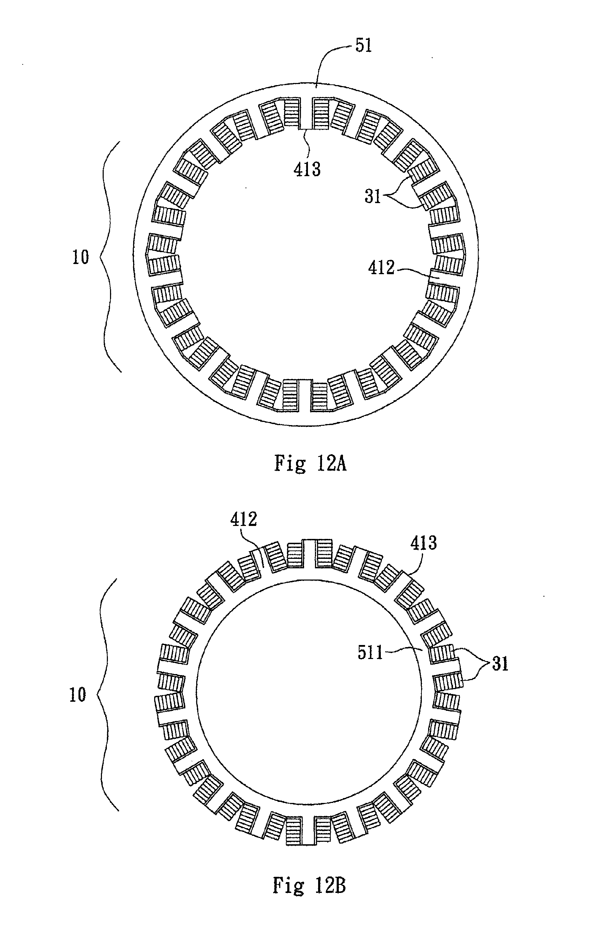

wherein E is the power source voltage, $\Omega$ is the armature's rotation speed, D is the armature's outer diameter, B is the magnetic flux density of air gap, L is the stacked thickness, N is the total number of turns of conductors, $K_E$ is the counter electro force coefficient, and $K_T$ is the torsion coefficient, we know that the counter electro force coefficient $K_E$ is inversely proportional to the armature's rotation speed $\Omega$, and $K_E$ also relates the armature's outer diameter D, the magnetic flux density of air gap B, the staked thickness L, and the total number of turns of conductors N. If the armature's outer diameter D, the magnetic flux density of air gap B, and the stacked thickness L are fixed, changing the total number of turns of conductors N will change the rated highest rotation speed. However, as shown in Figs. 3A to 3G, although coils differ due to different sizes of wire material, only 6 turns of coils can be wound in Figs. 3A, 3B, and 3C, 8 turns of coils can be wound in Fig. 3D, 10 turns of coils can be wound in Fig. 3E, 12 turns of coils can be wound in Fig. 3F, and 14 turns of coils can be wound in Fig. 3G. Evidently, if it is necessary to wind 7, 9, 11, or 13 turns of coils due to the requirement of the working point, the above figures cannot be chosen and the number of turns of coils in the above figures needs to be discounted, hence reducing the occupation ratio of coils in the wire groove seat. Moreover, because there are inevitably gaps existing between circular wire materials, the occupation ratio of wire wound coils cannot be highly utilized, hence reducing the cross-sectional area of coils and thus increasing the impedance of copper wire of coils. From the equation: $P=I^2 \cdot R$, wherein P is the power loss of copper wire of coils, I is the current of coils, and R is the impedance of copper wire of coils, the power loss of copper wire of coils is also increased.

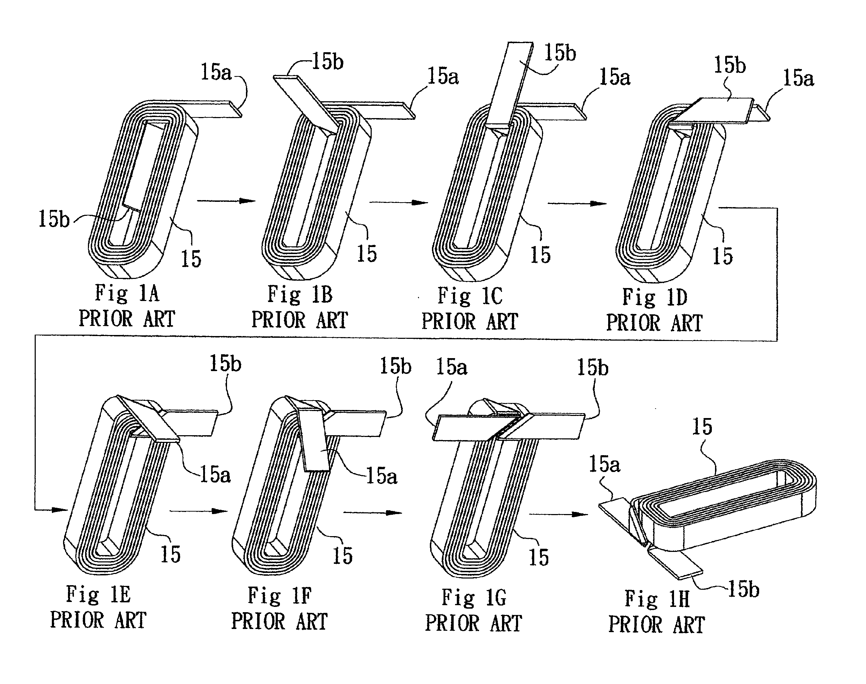

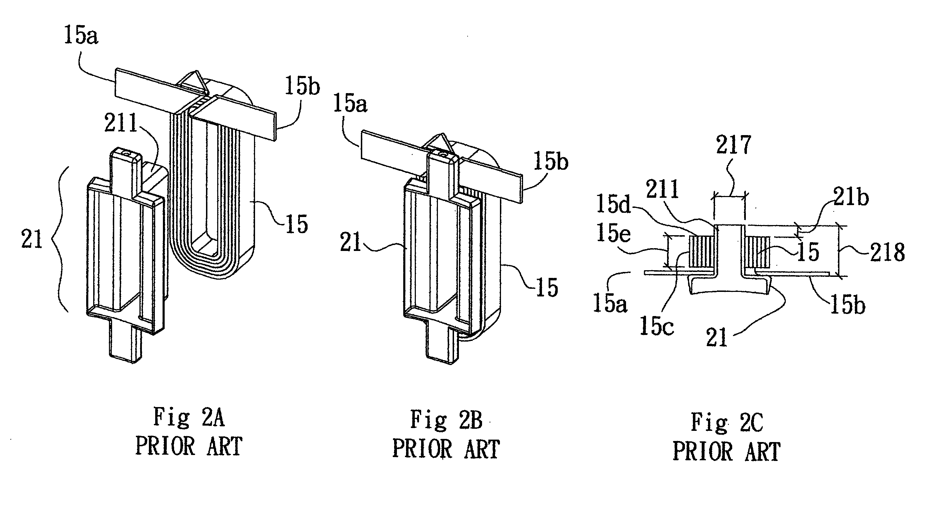

US Pat. No. 5,866,965 shown in the attached figure discloses a variable reluctance motor having foil wire wound coils, wherein foil wire wound coils 15 are provided. The foil wire wound coils 15 are wound using a cylinder winder and slipped onto stator poles 13. The foil has two corresponding face portions, two corresponding sides, and a start winding 15b and a finish winding 15a. The face portions are slipped onto the surface of the stator pole 13. One of the two side portions is disposed on the flat 13a. The start winding is thus hidden inside a coil formed by winding the foil wire, as shown in Fig. 2 in US. Pat. No. 5,866,965. Therefore, it is necessary to perform two times of processing to lead out the start winding 15b, as shown in Fig. 1 in US. Pat. No. 5,866,965. The start winding 15b of the foil wire wound coil 15 must be folded and turned three times to be led out. The procedures for leading out the start and finish windings 15b and 15a are shown in Figs. 1A to 1G of the present invention. Therefore, the processing is difficult, and the cost is high. Fig. 1H of the present invention can be compared with the coil 15 shown in Fig. 1 of US Pat. No. 5,866,965.

Besides, if the motor disclosed in US Pat. No. 5,866,965 is to be applied in occasions of high current, the coil must have a large cross-sectional area. In other words, it is necessary to use thicker foil wire, resulting in difficult processing in folding and turning the start and finish windings three times. Therefore, the disclosure of US Pat. No. 5,866,965 cannot apply to the occasions of high current.

Furthermore, the width of the face portion of the foil wire must be slightly smaller than the width of the stator pole 13. Otherwise, the start winding 15b cannot be folded and turned three times and then led out (please refer to Figs. 1A and 1B of the present invention).

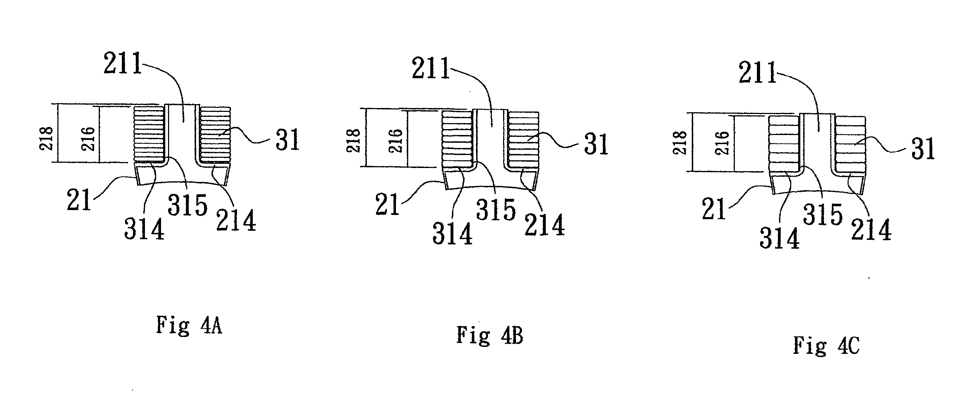

The coil 15 of US Pat. No. 5,866,965 applies to the situation that the thickness of the stator pole 13 of a stator 11 of a variable reluctance motor is larger than the depth thereof, as shown in Fig. 4 of US Pat. No. 5,866,965. Therefore, the coil 15 can still have a reasonable occupation ratio of wire groove. However, if the manufacturing way of coil of US Pat. No. 5,866,965 is applied to stators of the present invention, the occupation ratio will decrease and the foil wire wound coil becomes thinner. The coil 15 of Fig. 1G is slipped onto a lengthwise vertical pole end 211 of a wire groove seat 21 in Fig. 2. Because the depth 218 of the vertical pole end 211 is larger than the width thereof 217, and the face width of the coil 15 cannot be larger than the width 217 of the vertical pole end 211 (otherwise the start winding 15b cannot be folded and turned and then led out), the occupation ratio of the coil 15 of US Pat. No. 5,866,965 will be much lower than that of the coil 31 in Fig. 4C of the present invention. Simultaneously, the thickness of the side 15d of US Pat. No. 5,866,965 will also be much lower than that of the side 315 in Fig. 4 of the present invention.

The above reduction of occupation ratio of coil will lead to increase of impedance of copper wire. The power loss of copper wire of coil thus also increases to cause a high working temperature of copper wire. Because the impedance of copper wire is proportional to the working temperature of copper wire, the impedance of copper wire will increase proportionally. Therefore, how to increase the occupation ratio of coil in the wire groove to reduce the impedance of copper wire is a very important issue in manufacturing a high-efficiency electromotor or generator.

**Summary of the invention**

For stators of a conventional electromotor or generator, because a high-current working environment is required, thicker circular coils are used in wire groove seat and are wound and arranged in successive layers, as shown in Figs. 3A to 3H. Even a whole array of wires are adopted, the occupation ratios of various kinds of circular wires in the same wire groove seat will differ due to different sizes of circular wires. Simultaneously, various kinds of numbers of turns of coils cannot be arranged using various kinds of circular wires in the same wire groove seat with uniform occupation ratio, as shown in Figs. 3A to 3G. Much trouble will arise in the design of rotation speed in the working range of an electromotor or a generator because of the above reasons. From the equation: $E=\Omega \cdot D \cdot B \cdot L \cdot N/2 = \Omega \cdot K_E$, we know that the counter electro force coefficient $K_E$ is inversely proportional to the armature's rotation speed $\Omega$, and $K_E$ is inversely proportional to the armature's outer diameter D, the magnetic flux density of air gap B, the staked thickness L, and the total number of turns of conductors N. Therefore, when electromotors or generators of the same volume are designed to be used in different working ranges, change of the total number of turns of conductors N , Based on the above reason, the present invention proposes an assembly type stator structure having flat wound coils, wherein the thickness of foil wire is changed. Because the total thickness of coil end divided by the required number of turns of a foil wire wound coil 31 equals to the thickness of a side 315 of the foil wire wound coil 31 (as shown in Figs. 4A to 4C), coils of various kinds of numbers of turns can be flexibly designed, and the counter electro force coefficient KE can be exactly controlled. Moreover, because there is no waste of arrangement gap of wire materials, the occupation ratio of wire groove is inevitably higher.

The various objects and advantages of the present invention will be more readily understood from the following detailed description when read in conjunction with the appended drawing, in which:

**Brief description of the drawings:**

Figs. 1A to 1D show the folding procedures of a start winding 15b of a coil 15 in US Pat. No. 5,866,965;
Figs. 1E to 1G show the folding procedures of a finish winding 15a of a coil 15 in US Pat. No.

5,866,965;
Fig. 1H is Fig. 1G viewed from another direction, which can be compared with the coil 15 in Fig. 1 of US. Pat. No. 5,866,965;
Figs. 2A and 2B are assembly views of slipping the coil 15 onto a wire groove seat 21 of US. Pat. No. 5,866,965;
Fig. 2C is a diagram showing the occupation ratio of slipping the coil 15 onto the wire groove seat 21 of US. Pat. No. 5,866,965;
Figs. 3A to 3G are diagrams showing different occupation ratios and numbers of turns of various kinds of circular coils 311 in the wire groove seat 21;
Fig. 3H is an assembly cross-sectional view of an outer stator of a conventional circular coil 311;
Figs. 4A to 4C are assembly views of various kinds of foil wires with different thickness and numbers of turns and the wire groove seats of the outer stator of the present invention;
Fig. 5A is a cross-sectional view showing the occupation ratio of the coil 15 of US. Pat. No. 5,866,965 in the wire groove seat 21;
Fig. 5B is a cross-sectional view showing the occupation ratio of the circular cross-section coil 311 in the wire groove seat 21;
Fig. 5C is a cross-sectional view showing the occupation ratio of the coil 31 of the present invention in the wire groove seat 21;
Figs. 6A and 6B are perspective assembly views of stator ring portions, stator tooth portions, stator wire groove seats, and foil wire wound coils of an outer stator of the present invention;
Figs. 6C and 6D are perspective assembly views of stator ring portions, stator tooth portions, stator wire groove seats, and foil wire wound coils of an inner stator of the present invention;
Fig. 7A is a structural cross-sectional view of an assembled outer stator whose ring portions have recessed and projective embedding ends according to a first embodiment of the present invention;
Fig. 7B is a structural cross-sectional view of an assembled inner stator whose ring portions have recessed and projective embedding ends according to a second embodiment of the present invention;
Fig. 8A is a structural cross-sectional view of an assembled outer stator whose ring portions have recessed and projective embedding ends according to a third embodiment of the present invention;
Fig. 8B is a structural cross-sectional view of an assembled inner stator whose ring portions have recessed and projective embedding ends according to a fourth embodiment of the present invention;
Fig. 9A is a structural cross-sectional view of an assembled outer stator whose ring portions are integrally formed according to a fifth embodiment of the present invention;
Fig. 9B is a structural cross-sectional view of an assembled inner stator whose ring portions are integrally formed according to a sixth embodiment of the present invention;

Figs. 10A to 10D are perspective assembly view of outer stator tooth portions 415 and tooth-holding closed rings 418 joined together according to a seventh embodiment of the present invention;

Figs. 11A to 11D are perspective assembly view of inner stator tooth portions 411 and tooth-holding closed rings 418 joined together according to a eighth embodiment of the present invention;

Fig. 12A is a structural cross-sectional view of an outer stator portion, wherein the tooth face end of the stator should not be larger than the root end, and the root end is integrally formed with the outer stator ring portion; and

Fig. 12B is a structural cross-sectional view of an inner stator portion, wherein the tooth face end of the stator should not be larger than the root end, and the root end is integrally formed with the inner stator ring portion.

Attached figure: Brief description and a perspective view of U.S. Pat. No. 5,866,965.

**Detailed description of the preferred embodiments**

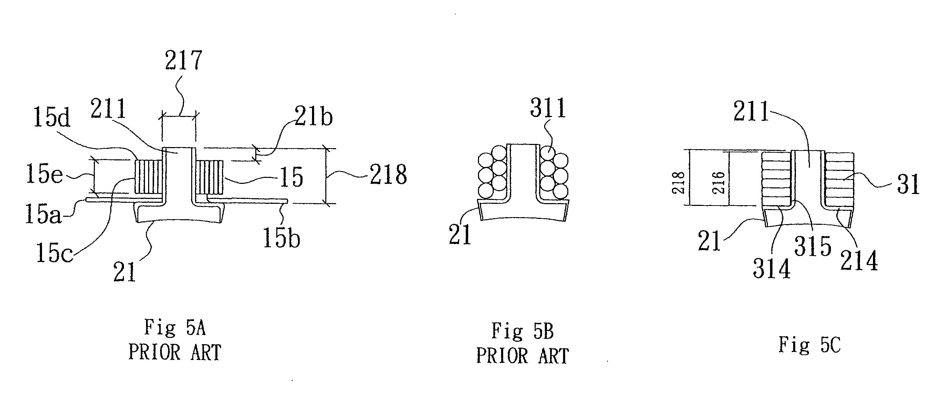

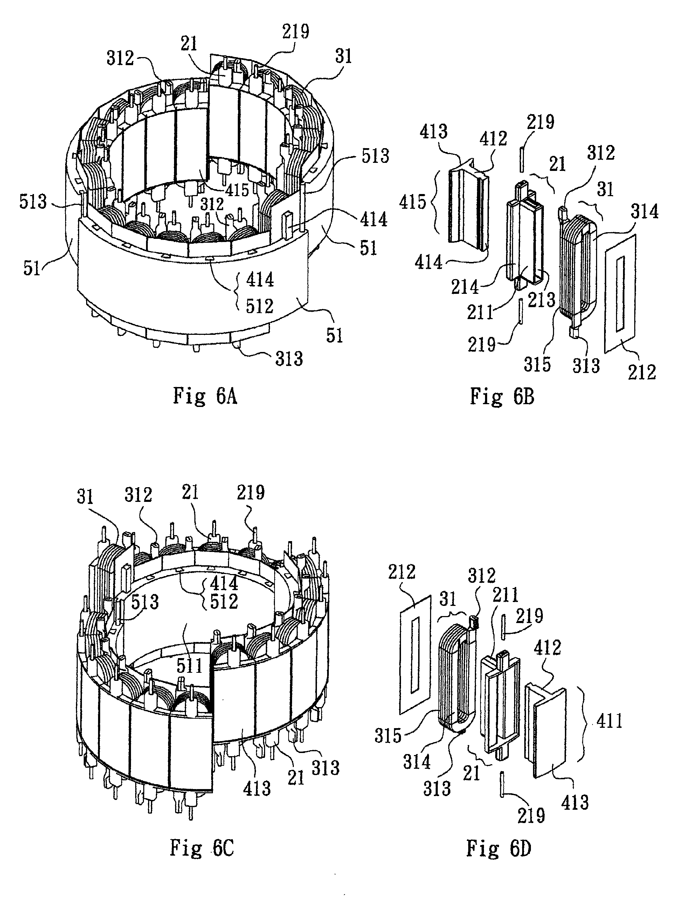

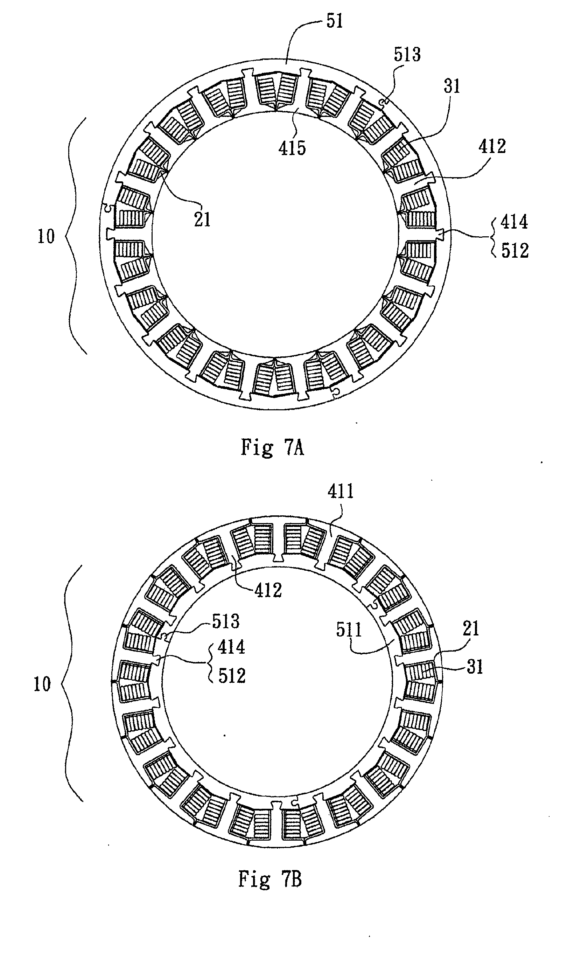

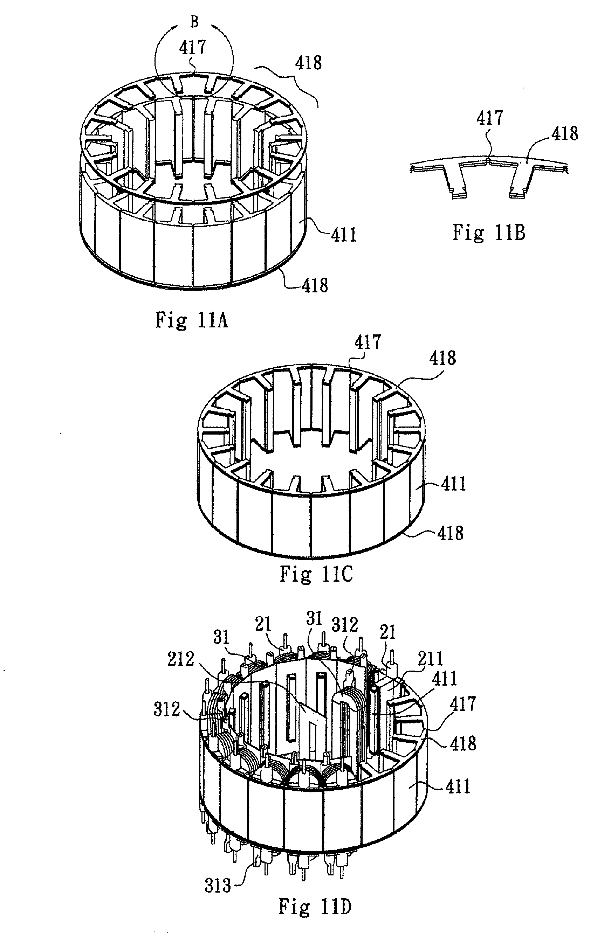

As shown in Figs. 1 to 11, an assembly type stator structure 10 having flat coils of the present invention comprises stator ring portions 51 and 511. The inner edge or outer edge of the stator ring portion are divided into a plurality of equal circular angles having the same number as stator tooth portions 411 and 415 and used for installing the stator tooth portions 411, 415 therein.

The stator tooth portions 411 and 415 have tooth face ends corresponding to a rotor portion of an electromotor or a generator for armature reaction. A root end 412 is extended rearwards from the tooth face end. The root end 412 is used for installation of a flat coil 31.

The flat coil 31 is formed of a flat wire, and has two corresponding faces 314, two corresponding sides 315, a start winding 312, and a finish winding 313. The faces 314 are horizontally and inwardly laminated to be passed through by the root ends 412. The inner sides are insulatingly slipped onto the root end 412 so that the start winding 312 and the finish winding 313 can be exposed out of the root end 412.

Moreover, the above flat wire should be bent and laminated in several turns by a coil former with the sides 315 as the bottom and the erected face portions 314.

The inner edge or outer edge of the stator ring portion 51 or 511 is divided into a plurality of equal circular angles having the same number as the stator tooth portions 411 or 415. A plurality of embedding grooves 512 are recessed toward the direction of the other ring end. The embedding grooves 512 are used for installing the stator tooth portions 411, 415 therein.

A root tail end 414 is extended rearwards from the distal end of the root end 412 of the stator tooth portion 411 or 415. The root tail end 414 should be not greater than the maximum width of the root end 412. The root tail end 414 also corresponds to and can be slipped into the recessed embedding groove 512 of the stator ring portion 51 and 511.

The tooth face end 413 of the stator tooth portion 411 or 415 is larger than the width of the root end 412. The tooth face end 413 is of tooth-holding curved shape. However, the width or the geometrical structure of the curved tooth-holding end is not limited.

The width of the tooth face end 413 of the stator tooth portion 411 or 415 should not be larger than the width of the root end 412. The stator tooth portions 411 and 415 are integrally formed at the inner edges or outer edges of the stator ring portions 51 and 511.

The width of the tooth face end 413 of the stator tooth portion 411 or 415 should not be larger than the width of the root end 412 so that the flat coil 31 can be slipped onto the root end 412.

Tooth-holding closed rings 418 are disposed above and below the stator tooth portions 411 and 415. The tooth-holding closed rings 418 are joined together using adjacent tooth-holding ends 417 so that the stator tooth portions 411 and 415 can be joined together using the tooth-holding closed rings 418. The flat coils 31 can be installed with a whole stator tooth portion.

The stator ring portion can be decomposed into a plurality of units. Left and right ends of each unit are embedded with left and right ends of an adjacent unit with recessed and projective embedding ends 513. The width of an inner groove of the recessed embedding end should be larger than the width of a rabbet thereof. Two adjoining units cannot be transversally moved and separated after the projective embedding end of one unit is embedded with the recessed embedding groove of the adjacent unit.

The stator ring portion can be decomposed into a plurality of units. Left and right ends of each unit are embedded with left and right ends of an adjacent unit with recessed and projective embedding ends 514. The width of an inner groove of the recessed embedding end should be smaller than or equal to the width of a rabbet thereof. Two adjoining units can be transversally moved and separated after the projective embedding end of one unit is embedded with the recessed embedding groove of the adjacent unit.

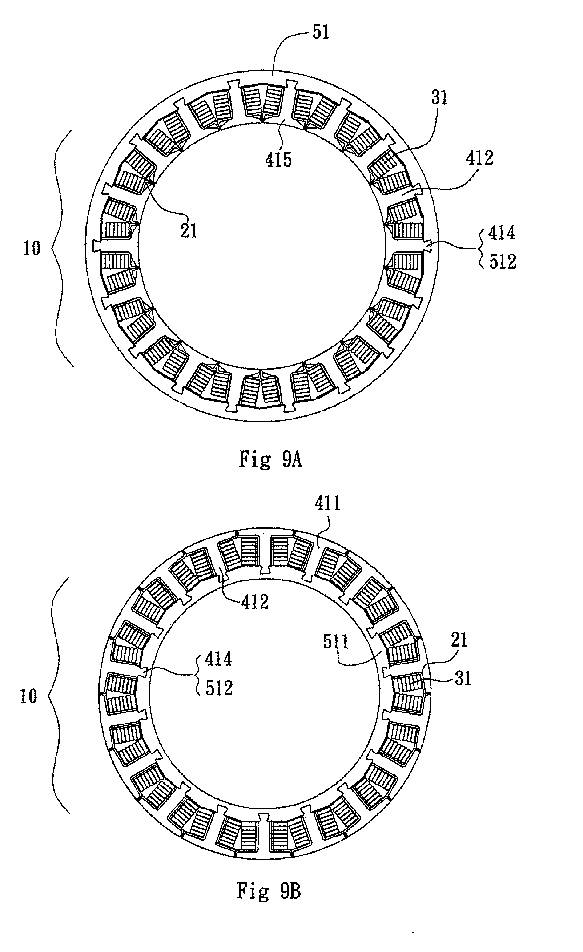

The stator ring portion (51 and 511 in Figs. 9A and 9B) is integrally formed in a closed ring shape.

The stator tooth portion uses a T-shaped wire groove seat 21 as insulating material. The T-shaped wire groove seat 21 provides a lengthwise vertical pole 211 so that the flat coil 31 can be slipped thereonto. A hollow shape 213 should be formed in the vertical pole end 211 and can be slipped onto and separated from the stator root end 412. The hollow shape 213 is a hollow end of the wire groove seat.

The stator tooth portion uses a wire groove seat 21 of a nonspecific shape as insulating material. The wire groove seat 21 provides a lengthwise vertical pole 211 so that the flat coil 31 can be slipped thereonto. A hollow shape 213 should be formed in the vertical pole end 211 and can be slipped onto and separated from the stator root end 412. The hollow shape 213 is a hollow end of the wire groove seat.

The periphery of the root end of the stator tooth portion is sheathed by insulating material. The insulating material provides an insulating interface between the stator tooth portion 21, the stator ring portion 51 or 511, and the flat coil 31.

The inner ring or outer ring of the stator ring portion 51 or 511 is not limited to any geometrical shape.

The stator ring portion can be an outer stator ring portion 51 of an electromotor or a generator.

The stator ring portion can also be an inner stator ring portion 511 of an electromotor or a generator.

The stator tooth portion can be an inner stator tooth portion 411 of an electromotor or a generator.

The stator tooth portion can also be an outer stator tooth portion 415 of an electromotor or a generator.

According to operational conditions of an electromotor or a generator, it is not limited that only a single flat coil 31 of the stator tooth portion 41 is slipped onto the stator root end 412, but the stator root end 412 can have a plurality of flat coils 31 slipped thereonto. The above stator coil can be a flat coil 31 or a circular cross-section coil 311.

The flat coil 31 can be an exciting coil of an electromotor.

The flat coil 31 can also be an induction coil of a generator.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

**Claims**

1. An assembly type stator structure having flat coils, comprising:

   a stator ring portion whose inner edge or outer edge is divided into a plurality of equal circular angles having the same number as stator tooth portions and used for installing stator tooth portions therein;
   stator tooth portions having tooth face ends corresponding to a rotor portion of an electromotor or a generator for armature reaction, a root end being extended rearwards from said tooth face end, said root end being used for installation of a flat coil;
   flat coils formed of flat wires, each of said flat coils having two corresponding faces, two corresponding sides, a start winding, and a finish winding, said faces being horizontally and inwardly laminated to be passed through by said root ends, said inner side being insulatingly slipped onto said root end so that said start winding and said finish winding can be exposed out of said root end, flat wires being bent and laminated in several turns by a coil former with said sides as the bottom and said faces being erected to form said flat coils.

2. The assembly type stator structure having flat coils as claimed in claim 1, wherein an inner edge or outer edge of said stator ring portion is divided into a plurality of equal circular angles having the same number as said stator tooth portions, a plurality of embedding grooves are recessed toward the direction of the other ring end, and said embedding grooves are used for installing said stator tooth portions therein.

3. The assembly type stator structure having flat coils as claimed in claim 1, wherein a root tail end is extended rearwards from a distal end of said root end of said stator tooth portion, the width of said tooth face end of said stator tooth portion should not be larger than the maximum width of said root end, and said root tail end also corresponds to and can be slipped into said recessed embedding groove of said stator ring portion.

4. The assembly type stator structure having flat coils as claimed in claim 1, wherein the width of said tooth face end of said stator tooth portion is larger than that of said root end, said tooth face end is of a tooth-holding curved shape, and the width or geometrical structure of said curved tooth-holding end is not limited.

5. The assembly type stator structure having flat coils as claimed in claim 1, wherein the width of said tooth face end of said stator tooth portion should not be larger than that of said root end, and said stator tooth portion is integrally formed at the inner edge or outer edge of said stator ring portion.

6. The assembly type stator structure having flat coils as claimed in claim 1, wherein the width of said tooth face end of said stator tooth portion should not be larger than that of said root end so that said flat coil can be slipped onto said root end.

7. The assembly type stator structure having flat coils as claimed in claim 1, wherein tooth-holding closed rings are disposed above and below said stator tooth portions, said tooth-holding closed rings are joined together using adjacent tooth-holding ends so that said stator tooth portions can be joined together using said tooth-holding closed rings, and said flat coils can be installed in said stator tooth portions.

8. The assembly type stator structure having flat coils as claimed in claim 1, wherein said stator ring portion is decomposed into a plurality of units, left and right ends of each said unit are embedded with left and right ends of an adjacent unit with recessed and projective embedding ends, the width of an inner groove of said recessed embedding end should be larger than the width of a rabbet thereof, and the adjoining units cannot be transversally moved and separated after said projective embedding end of one unit is embedded with said recessed embedding groove of the adjacent unit.

9. The assembly type stator structure having flat coils as claimed in claim 1, wherein said stator ring portion is decomposed into a plurality of units, left and right ends of each said unit are embedded with left and right ends of an adjacent unit with recessed and projective embedding ends, the width of an inner groove of said recessed embedding end should be smaller than or equal to the width of a rabbet thereof, two adjoining units can be transversally moved and separated after said projective embedding end of one unit is embedded with said recessed embedding groove of the adjacent unit.

10. The assembly type stator structure having flat coils as claimed in claim 1, wherein said stator ring portion is integrally formed in a closed ring.

11. The assembly type stator structure having flat coils as claimed in claim 1, wherein said stator tooth portion uses a T-shaped wire groove seat as insulating material, said T-shaped wire groove seat provides a lengthwise vertical pole so that said flat coil can be slipped thereonto, a hollow shape should be formed in said vertical pole end and can be slipped onto and separated from said stator root end, said hollow shape is a hollow end of said wire groove seat.

12. The assembly type stator structure having flat coils as claimed in claim 1, wherein said stator tooth portion uses a wire groove seat of a nonspecific shape as insulating material, said wire groove seat provides a lengthwise vertical pole so that said flat coil 31 can be slipped thereonto, a hollow shape should be formed in said vertical pole end and can be slipped onto and separated from said stator root end, said hollow shape is a hollow end of said wire groove seat.

13. The assembly type stator structure having flat coils as claimed in claim 1, wherein the periphery of said root end of said stator tooth portion is sheathed by insulating material, and the insulating material provides an insulating interface between said stator tooth portion, said stator ring portion, and said flat coil.

14. The assembly type stator structure having flat coils as claimed in claim 1, wherein the inner ring or outer ring of said stator ring portion is not limited to any geometrical shape.

15. The assembly type stator structure having flat coils as claimed in claim 1, wherein said stator ring portion is an outer stator ring portion of an electromotor or a generator.

16. The assembly type stator structure having flat coils as claimed in claim 1, wherein said stator ring portion is an inner stator ring portion of an electromotor or a generator.

17. The assembly type stator structure having flat coils as claimed in claim 1, wherein said stator tooth portion is an inner stator tooth portion of an electromotor or a generator.

18. The assembly type stator structure having flat coils as claimed in claim 1, wherein said stator tooth portion is an outer stator tooth portion of an electromotor or a generator.

19. The assembly type stator structure having flat coils as claimed in claim 1, wherein, according to operational conditions of an electromotor or a generator, it is not limited that only a single flat coil of said stator tooth portion is slipped onto said stator root end, but said stator root end can have a plurality of flat coils slipped thereonto, said stator coil can be a flat coil or a circular cross-section coil.

20. The assembly type stator structure having flat coils as claimed in claim 1, wherein said flat coil is an exciting coil of an electromotor.

21. The assembly type stator structure having flat coils as claimed in claim 1, wherein said flat coil is an induction coil of a generator.

EP 1 383 225 A1

Fig 1A
PRIOR ART
15b
15
15a

Fig 1B
PRIOR ART
15b
15
15a

Fig 1C
PRIOR ART
15
15b
15a

Fig 1D
PRIOR ART
15
15b
15a

Fig 1E
PRIOR ART
15
15a
15b

Fig 1F
PRIOR ART
15
15a
15b

Fig 1G
PRIOR ART
15
15a
15b

Fig 1H
PRIOR ART
15
15a
15b

7

EP 1 383 225 A1

15a

211

21

15

15b

15a

211

21

15

15b

217

15d
15e

211

15a

15c

21

21b

15

218

15b

Fig 2A
PRIOR ART

Fig 2B
PRIOR ART

Fig 2C
PRIOR ART

Fig. 3A
PRIOR ART

Fig. 3B
PRIOR ART

Fig. 3C
PRIOR ART

Fig. 3D
PRIOR ART

Fig. 3E
PRIOR ART

Fig. 3F
PRIOR ART

Fig. 3G
PRIOR ART

Fig. 3H
PRIOR ART

Fig 4A

Fig 4B

Fig 4C

EP 1 383 225 A1

217

15d 211 21b

15e 21 15

15a 218

15c 15b

21

Fig 5A
PRIOR ART

311

21

Fig 5B
PRIOR ART

211

218 216 31

21 315
314 214

Fig 5C

11

Fig 6A

Fig 6B

Fig 6C

Fig 6D

Fig 7A

Fig 7B

Fig 8A

Fig 8B

Fig 9A

Fig 9B

B
417 418

417
418

Fig 10B

415

Fig 10A

417
418
417
418
31
415

Fig 10C

312 212
31
21
212
417
21
31
312
418
211 313

313
415

Fig 10D

B

417

418

Fig 11A

417

418

Fig 11B

411

418

417

418

411

418

Fig 11C

31    21    31    312    21

212                    211
                       411
312                    417
                       418
                       411

313

Fig 11D

Fig 12A

Fig 12B

**European Patent Office**

**EUROPEAN SEARCH REPORT**

Application Number

EP 02 01 5855

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 255 344 A (HSU CHUN-PU) 6 November 2002 (2002-11-06) <br><br> * the whole document * <br> --- | 1-6, 8-18,20, 21 | H02K3/18 H02K1/14 |
| X | PATENT ABSTRACTS OF JAPAN vol. 2002, no. 03, 3 April 2002 (2002-04-03) -& JP 2001 320848 A (ASMO CO LTD), 16 November 2001 (2001-11-16) | 1-4 | |
| Y | * abstract * <br><br> --- | 7-18,20, 21 | |
| X | PATENT ABSTRACTS OF JAPAN vol. 2000, no. 24, 11 May 2001 (2001-05-11) -& JP 2001 186703 A (ASMO CO LTD), 6 July 2001 (2001-07-06) * abstract * <br> --- | 1-4 | |
| X | PATENT ABSTRACTS OF JAPAN vol. 2002, no. 07, 3 July 2002 (2002-07-03) -& JP 2002 095226 A (ASMO CO LTD), 29 March 2002 (2002-03-29) * abstract * <br> --- | 1-4 | **TECHNICAL FIELDS SEARCHED (Int.Cl.7)** <br><br> H02K |
| X | US 4 312 387 A (FINEGOLD HYMAN B) 26 January 1982 (1982-01-26) * figure 4 * <br> --- | 1 | |
| Y | US 6 404 095 B1 (HSU CHUN-PU) 11 June 2002 (2002-06-11) <br><br> * figures 2B-D * <br> --- <br> -/-- | 8-10, 14-18, 20,21 | |

The present search report has been drawn up for all claims

| Place of search | Date of completion of the search | Examiner |
|---|---|---|
| BERLIN | 29 November 2002 | Roy, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 383 225 A1

**European Patent Office**

# EUROPEAN SEARCH REPORT

**Application Number**

EP 02 01 5855

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 356 005 B1 (HSU CHUN-PU) 12 March 2002 (2002-03-12) * figures 2A-C,3 * | 8-18,20, 21 | |
| Y | PATENT ABSTRACTS OF JAPAN vol. 018, no. 434 (E-1592), 12 August 1994 (1994-08-12) -& JP 06 133501 A (MITSUI HIGH TEC INC), 13 May 1994 (1994-05-13) * abstract * | 7 | |
| Y | PATENT ABSTRACTS OF JAPAN vol. 2000, no. 03, 30 March 2000 (2000-03-30) -& JP 11 346446 A (HITACHI LTD), 14 December 1999 (1999-12-14) * abstract * | 7 | |
| X | PATENT ABSTRACTS OF JAPAN vol. 2000, no. 25, 12 April 2001 (2001-04-12) -& JP 2001 231224 A (TOGO SEISAKUSHO CORP), 24 August 2001 (2001-08-24) * abstract * | 1-4 | |
| X | EP 0 891 030 A (TOYOTA MOTOR CO LTD) 13 January 1999 (1999-01-13) * column 6, line 38 - line 48; figures 5A,5B * | 1,5,6 | |
| A | PATENT ABSTRACTS OF JAPAN vol. 1996, no. 06, 28 June 1996 (1996-06-28) & JP 08 033254 A (SANKYO SEIKI MFG CO LTD), 2 February 1996 (1996-02-02) * abstract * | 1 | |

TECHNICAL FIELDS SEARCHED (Int.Cl.7)

The present search report has been drawn up for all claims

| Place of search | Date of completion of the search | Examiner |
|---|---|---|
| BERLIN | 29 November 2002 | Roy, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

20

**ANNEX TO THE EUROPEAN SEARCH REPORT
ON EUROPEAN PATENT APPLICATION NO.**       EP 02 01 5855

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2002

| Patent document cited in search report | | Publication date | Patent family member(s) | | Publication date |
|---|---|---|---|---|---|
| EP 1255344 | A | 06-11-2002 | EP | 1255344 A1 | 06-11-2002 |
| JP 2001320848 | A | 16-11-2001 | NONE | | |
| JP 2001186703 | A | 06-07-2001 | NONE | | |
| JP 2002095226 | A | 29-03-2002 | NONE | | |
| US 4312387 | A | 26-01-1982 | US | 4131988 A | 02-01-1979 |
| | | | CA | 1121580 A1 | 13-04-1982 |
| | | | CA | 1152300 A2 | 23-08-1983 |
| | | | CA | 1177870 A2 | 13-11-1984 |
| | | | DE | 2746351 A1 | 03-05-1978 |
| | | | ES | 463220 A1 | 01-07-1978 |
| | | | FR | 2369717 A1 | 26-05-1978 |
| | | | GB | 1596182 A | 19-08-1981 |
| | | | GB | 1596181 A | 19-08-1981 |
| | | | IT | 1087592 B | 04-06-1985 |
| | | | JP | 1454729 C | 25-08-1988 |
| | | | JP | 53055703 A | 20-05-1978 |
| | | | JP | 62058235 B | 04-12-1987 |
| | | | JP | 1769749 C | 30-06-1993 |
| | | | JP | 4049336 B | 11-08-1992 |
| | | | JP | 61112540 A | 30-05-1986 |
| | | | US | 4446393 A | 01-05-1984 |
| US 6404095 | B1 | 11-06-2002 | NONE | | |
| US 6356005 | B1 | 12-03-2002 | NONE | | |
| JP 06133501 6 | A | | NONE | | |
| JP 11346446 6 | A | | NONE | | |
| JP 2001231224 | A | 24-08-2001 | NONE | | |
| EP 0891030 | A | 13-01-1999 | JP | 11032457 A | 02-02-1999 |
| | | | EP | 0891030 A2 | 13-01-1999 |
| | | | US | 6218758 B1 | 17-04-2001 |
| JP 08033254 4 | A | | NONE | | |

EPO FORM P0459

For more details about this annex : see Official Journal of the European Patent Office, No. 12/82